# FASCICULE DE BREVET EUROPEEN

(11) **EP 1 934 122 B1**
(45) Date de publication et mention de la délivrance du brevet: **26.05.2010**
(21) Numéro de dépôt: 06820191.2
(22) Date de dépôt: 11.10.2006
(51) Int. Cl.: B65G 47/24, B65C 9/06, B41F 15/08

(54) **PROCEDE DE CHARGEMENT AUTOMATIQUE ET SEQUENTIEL D'OBJETS ET EQUIPEMENT CORRESPONDANT**
VERFAHREN ZUM AUTOMATISCHEN UND SEQUENZIELLEN LADEN VON GEGENSTÄNDEN UND ENTSPRECHENDE AUSRÜSTUNG
METHOD FOR AUTOMATICALLY AND SEQUENTIALLY LOADING OBJECTS AND CORRESPONDING EQUIPMENT

(30) Priorité: 13.10.2005 FR 0510671
(43) Date de publication de la demande: 25.06.2008
(73) Titulaire: Saverglass SAS, 60960 Feuquieres (FR)
(72) Inventeur: LOURMAN Didier, F-80430 Lafresguimont Saint Martin (FR); HECKMANN, Didier, F-13300 Salon de Provence (FR)
(74) Mandataire: Bentz, Jean-Paul
(86) Numéro de dépôt international: PCT/FR2006/002290
(87) Numéro de publication internationale: WO 2007/042673

(56) Documents cités:
- US-A- 3 363 546
- US-A- 5 317 967

## Description

La présente invention concerne, de façon générale, le domaine des procédés, et équipements associés, de chargement automatique et séquentiel d'objets, notamment en vue de déposer un décor sur chaque objet.

Plus précisément, l'invention concerne un procédé de chargement automatique et séquentiel d'objets d'un type prédéterminé sur un dispositif de préhension, chaque objet et le dispositif de préhension présentant des premier et deuxième axes de rotation respectifs et des premier et deuxième repères respectifs de rotation autour de ces axes respectifs, le chargement de chaque objet sur le dispositif de préhension conduisant à un contact de cet objet avec ce dispositif, à un alignement des premier et deuxième axes, et à un calage angulaire des premier et deuxième repères dans une position angulaire relative prédéterminée, ce procédé comprenant les étapes consistant à opérer un déplacement de chaque objet jusqu'à assurer son contact avec le dispositif de préhension et opérer sélectivement une rotation relative de l'objet et du dispositif de préhension autour des premier et second axes de rotation pour atteindre ladite position de calage.

Lorsque l'on veut décorer un objet d'emballage en verre ou en matière organique (flacon, carafe, bouteille ou pot cosmétique par exemple) par un procédé classique tel que la sérigraphie ou la tampographie, on est confronté au problème du calage du décor à déposer avec d'une part les particularités géométriques de l'objet et, d'autre part, les décors ou ébauches de décor éventuellement préexistants, sachant que les objets se présentent dans une position angulaire aléatoire.

A titre d'exemples :
- le dépôt du décor doit être situé sur une zone bien définie de l'objet telle qu'un méplat, ou doit être positionné par rapport à un repère mécanique situé sur l'objet (cran ou picots de repérage) ou encore sur un élément de décor préexistant tel que, par exemple, une réserve (fenêtre transparente) dans un satinage ou un laquage;
- le décor doit être fait sur une zone dans laquelle l'objet ne présente pas de défaut, par exemple la marque de jointure de moules appelée « couture » sur les articles verriers.

Dans les machines (équipements) actuelles, le calage est essentiellement mécanique, réalisé en rendant solidaire une pièce de la machine de décor, appelée jupe, avec l'objet à décorer.

Le calage angulaire se fait par un pion escamotable, monté sur ressort, solidaire de la jupe, qui se cale dans un cran réalisé sur le fond de l'objet ou par un autre dispositif de blocage sur un cran positionné sur le corps de l'objet. Une fois l'objet immobilisé par rapport à la jupe, cette dernière est mise en rotation pour amener l'objet dans la position angulaire convenable au dépôt. A titre d'alternative, il existe des réalisations dans lesquelles la jupe est fixe et l'objet est mis en rotation.

Le calage mécanique présente les inconvénients suivants.
Lors de la mise en rotation relative de la jupe et de l'objet, les frottements entre les éléments mobiles (jupe et pion) et les éléments fixes (fond de l'objet) conduisent d'une part à une dégradation de l'aspect du fond dans le cas d'objets revêtus d'un vernis, d'une laque, ou d'un satinage chimique ; mais également à l'usure de la jupe et/ou du pion, qui peut survenir après quelques heures de fonctionnement, ce qui induit une perte la qualité de repérage angulaire, voire à une rupture de l'objet, ce qui induit un coût d'arrêt de machine et de pièces de remplacement.
Ces éléments peuvent également conduire à limiter la vitesse de rotation de la jupe et donc à baisser la cadence globale de production. Par ailleurs, ce type de méthode conduit à une précision limitée, à cause des tolérances mécaniques de l'objet, du pion et du cran. Ces tolérances pouvant conduire, par accumulation, à des non conformités.

Les documents US 5,317,967 et US 3,363,546 décrivent également le procédé selon le préambule de la revendication 1 et l'installation selon le préambule de la revendication 8.

La présente invention vise à rendre le calage plus précis, moins agressif, et/ou plus rapide.

Le procédé selon la revendication 1 permet d'atteindre cet objectif.

Le procédé selon l'invention comprend une étape de préparation, mise en oeuvre pour chaque objet en cours de chargement, et préalablement à son contact avec le dispositif de préhension.

Cette étape de préparation comprend une opération de repérage consistant à élaborer un signal de sortie représentatif de la position angulaire relative entre l'objet et le dispositif de chargement, et une opération de correction angulaire consistant à opérer une rotation relative en fonction dudit signal de sortie pour atteindre la position de calage.

Grâce à cette étape, la jupe et le pion peuvent se placer directement à l'angle convenable au moment où l'objet leur est présenté, c'est à dire que le déplacement de chaque objet comprend un mouvement de translation entre l'objet et le dispositif de préhension, pour atteindre la position de calage, ultérieur à l'opération de correction angulaire, ce qui évite les frottements dus au contact et à la rotation, et leurs inconvénients.

L'absence de mise en rotation de l'objet ou du dispositif de préhension (jupe) lorsqu'ils sont en contact permet de ne pas user les matériaux : on évite la dégradation du fond de l'objet par frottement, ce qui rend possible le dépôt de décor sur des objets, par exemple en verre ou en plastique, revêtus d'une matière organique telle qu'une laque ou un vernis, ou revêtus d'un revêtement minéral tel qu'un émail, ainsi que le décor sur des objets en verre satinés par voie chimique ou par sablage.

On évite également dans ce cas l'usure des pions qui peut provenir, dans les techniques antérieures, en quelques heures.

De plus, la séquence de positionnement est ainsi effectuée avec une bien meilleure rapidité : l'absence de frottement mécanique fait que la jupe, dont le moment d'inertie est faible peut être très rapidement pré-positionnée en face de l'objet de façon à ce que le pion se place dans le cran sans effort mécanique.

Dans un mode de réalisation, on peut ainsi même supprimer le pion d'accostage.

Dans un autre mode de réalisation, on peut donc également supprimer le cran de positionnement.

Dans le mode de réalisation préféré, l'élaboration du signal de sortie est effectuée par la saisie, par des moyens optiques, d'une image de l'objet. Puis un traitement de l'image obtenue est réalisé afin de repérer une caractéristique de l'objet ou d'un élément de décor présentant une signature optique. A partir de la caractéristique repérée, la position angulaire de l'objet par rapport auxdits moyens optiques est calculée.

Dans un mode de réalisation, la rotation relative est effectuée par rotation du dispositif de préhension autour de son axe de rotation.

La position angulaire absolue du dispositif de préhension étant connue, de même que la position de son repère propre (p.ex. le pion), il suffit de connaître la position angulaire relative du dispositif de préhension et de l'objet pour présenter l'objet dans une position adéquate au dépôt d'au moins un élément de décor.

Le procédé selon l'invention comprend donc, en outre, une opération de rotation, dans une position angulaire déterminée, de l'attelage constitué par l'objet et le dispositif de préhension solidaires, et une opération de dépôt d'au moins un élément de décor sur l'objet.

Dans un autre mode de réalisation, le procédé selon l'invention comprend, en outre, une opération de contrôle ou de repérage dudit dépôt ou d'un élément de décor déjà présent sur l'article.

Grâce à cette opération de contrôle, on peut effectuer un décor en reprise sur un objet partiellement décoré.

De préférence, l'opération de contrôle comprend les étapes consistant à saisir par des moyens optiques une image de l'objet, et réaliser un traitement de l'image obtenue pour repérer une caractéristique du décor présentant une signature optique. A partir de la caractéristique repérée, la position angulaire de l'élément de décor par rapport à l'objet est alors calculée, et un signal de sortie représentatif de la valeur de l'angle ainsi calculé est généré.

Dans un autre mode de réalisation, on peut recaler finement un objet dont le premier décor ne serait pas à l'exacte place tout en étant dans des tolérances permettant de rattraper une position acceptable.

L'invention concerne également un équipement pour le chargement automatique et séquentiel d'objets d'un type prédéterminé sur un dispositif de préhension, selon la revendication 8.

Dans un mode de réalisation, l'équipement est apte à mettre en oeuvre le procédé.

Chaque objet et le dispositif de préhension présentent des premier et deuxième axes de rotation respectifs et des premier et deuxième repères respectifs de rotation autour de ces axes respectifs.

Le chargement de chaque objet sur le dispositif de préhension conduit à un contact de cet objet avec ce dispositif, à un alignement des premier et deuxième axes, et à un calage angulaire des premier et deuxième repères dans une position angulaire relative prédéterminée.

L'équipement comprend le dispositif de préhension, des moyens pour déplacer chaque objet et pour assurer son contact avec le dispositif de préhension, et des moyens pour opérer sélectivement une rotation relative de l'objet et du dispositif de préhension autour des premier et second axes de rotation et pour atteindre ladite position de calage.

Cet équipement est **caractérisé en ce qu**'il comprend, en outre, des moyens de repérage configurés pour élaborer un signal de sortie représentatif de la position angulaire relative des premier et second repères, et des moyens de correction angulaire configurés pour opérer ladite rotation relative en fonction dudit signal de sortie.

Dans un mode de réalisation, les moyens de repérage sont des moyens optiques.

Et de préférence, les moyens optiques comprennent au moins une caméra.

Enfin, un autre avantage de l'invention réside en ce qu'elle peut être mise en oeuvre quelle que soit la forme de l'objet (carré, ovale, cylindrique, etc....).

D'autres caractéristiques et avantages de l'invention ressortiront clairement de la description qui en est faite ci-après, à titre indicatif et nullement limitatif, en référence aux dessins dans lesquels :
- la figure 1 est une représentation schématique d'un mode de réalisation de l'équipement selon l'invention ;
- la figure 2 est une représentation schématique d'un mode de réalisation du procédé selon l'invention'.

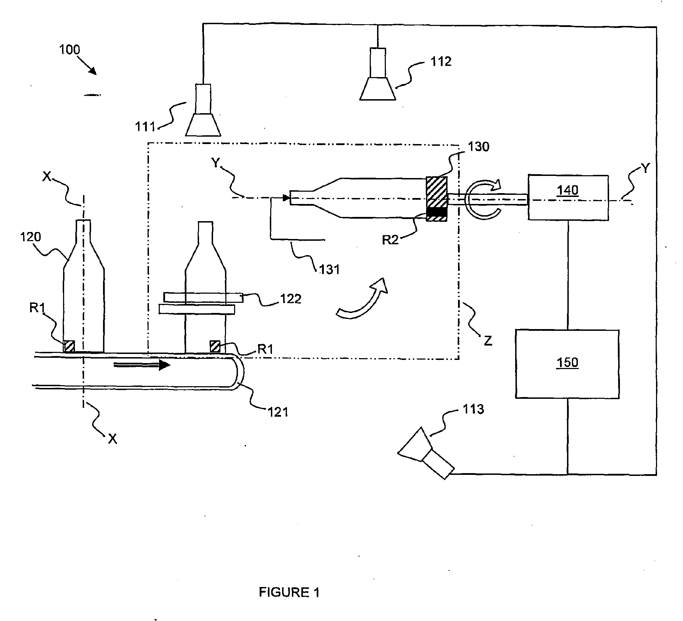

En référence à la figure 1, l'invention concerne notamment un équipement 100 pour le chargement automatique et séquentiel d'objets 120 d'un type prédéterminé sur un dispositif de préhension 130. De préférence, l'objet est une bouteille, un flacon ou une carafe. Il peut aussi être un pot cosmétique. De préférence également, il s'agit d'un article verrier.

Un exemple particulier de tel équipement est une machine rotative ou linéaire de sérigraphie multicouleurs pour article verrier.

Dans un mode de réalisation, le dispositif de préhension comprend au moins une jupe 130 et avantageusement une contrepointe 131 (partiellement représentée).

Chaque objet 120 et le dispositif de préhension 130 présentent des premier XX et deuxième YY axes de rotation respectifs et des premier R1 et deuxième R2 repères respectifs de rotation autour de ces axes respectifs.

Comme schématiquement représenté sur la figure 1, le chargement de chaque objet 120 sur le dispositif de préhension 130 conduit à un contact de cet objet avec ce dispositif, à un alignement des premier et deuxième axes, et à un calage angulaire des premier et deuxième repères dans une position angulaire relative prédéterminée.

L'équipement comprend notamment ledit dispositif de préhension. Il comprend également des moyens 121 pour déplacer chaque objet, tels qu'un tapis de convoi, et pour assurer son contact avec le dispositif de préhension, par exemple un bras mobile articulé - non représenté, et des moyens 140 pour opérer sélectivement une rotation relative de l'objet et du dispositif de préhension autour des premier et second axes de rotation et pour atteindre ladite position de calage.

Par exemple, les moyens 140 pour opérer sélectivement une rotation relative entre l'objet 120 et le dispositif de préhension 130 comprennent un moteur apte à mettre le dispositif de préhension 130 en rotation autour de son axe YY de rotation, dans le sens horaire et/ou anti-horaire.

L'opération de calage est classiquement réalisée sur deux postes : un poste de chargement et un poste de calage.

Sur le poste de chargement, les opérations suivantes sont effectuées, en prenant comme exemple d'objet une bouteille :
- l'objet est amené par un convoyeur 121 vers la zone de préhension Z où il peut être centré sur le tapis de l'équipement par deux languettes 122 de guidage latéral. Il est à ce moment disposé verticalement,
- l'objet est alors saisi par deux pinces - non représentées - et subit une rotation de 90° dans un plan vertical ce qui l'amène à être horizontal,
- l'objet est alors fixé entre deux éléments qui viennent s'ajuster, à savoir une jupe 130 motorisée par un moteur 140 qui se fixe sur le culot de l'objet et une contre pointe 131 qui appuie sur le col. Et l'objet est immobilisé en rotation, par exemple par un jeu de trois galets (non représentés),
- la jupe est un cylindre dont une extrémité est évidée de façon à recevoir le fond de l'objet et à le maintenir fixe selon l'axe YY jupe/contrepointe. Elle est munie d'un pion escamotable destiné à se positionner dans un cran R1 sur le fond de l'objet. Le pion peut constituer le repère R2 de rotation du dispositif de préhension.
   Sur le poste de calage, les opérations suivantes sont généralement effectuées :

- la jupe 131 (en contact avec l'objet) est mise en rotation jusqu'à ce que le pion sous l'action d'un ressort se positionne dans le cran, solidarisant ainsi la jupe avec l'objet selon un repère prédéfini.

L'ensemble constitué par l'objet 120, la jupe motorisée 130, et la contrepointe 131 est mis en rotation d'un angle déterminé pour positionner angulairement l'objet, autour de l'axe YY, avant le dépôt de décor, comme décrit ultérieurement. Cette opération a généralement lieu pendant la phase de transfert de l'objet vers un poste de décor (sérigraphie, tampographie, jet d'encre, etc.).

Cette rotation de l'ensemble des éléments ainsi solidaires est fonction du décor à déposer.

Selon l'invention, l'équipement comprend en outre des moyens de repérage 111, 113 configurés pour élaborer un signal de sortie représentatif de la position angulaire relative des premier R1 et second R2 repères, et des moyens de correction angulaire configurés pour opérer ladite rotation relative en fonction dudit signal de sortie. Les moyens de correction angulaires comprennent, par exemple, un automate 150 qui commande la mise rotation de la jupe 130 par un moteur 140.

De préférence, les moyens de repérage 111, 113 sont des moyens optiques. Et plus particulièrement, les moyens optiques comprennent au moins une caméra.

Dans un mode de réalisation particulier, les moyens de repérage 111 sont situés juste au-dessus de l'objet lorsque celui-ci est, sur le convoyeur, maintenu par les pinces, juste avant que l'objet subisse la rotation de 90° dans un plan vertical qui l'amène à être horizontal.

On saisit alors par une ou plusieurs cameras une image de l'objet quand celui-ci se trouve encore sur le convoyeur d'alimentation 121 de l'équipement et, de préférence, mais de manière non obligatoire, quand celui ci est centré par des languettes de centrage 122, au moment de, ou juste après, sa saisie par des pinces de préhension (non représentées) de la machine de décor. Et dans un exemple particulier, la saisie de l'objet par les pinces de saisie déclenche un signal de commande de prise d'image(s).

A partir de l'image et de la caractéristique géométrique R1 repérée, on calcule alors la position angulaire de l'objet par rapport à la caméra et on la communique à un automate 150 qui commande la mise en rotation, par un moteur électrique 140, de la jupe 130 munie de son pion R2 pour que l'accostage et le positionnement du pion se fasse par seul un mouvement de translation. Ainsi l'invention permet de supprimer les frottements dus au contact et au mouvement rotatif relatif entre la jupe et l'objet.

Typiquement, pour une bouteille 120, la caméra est placée verticalement au dessus du convoyeur d'entrée 121 et juste au dessus du goulot de l'objet. La caméra voit donc son fond par l'ouverture.

A titre d'alternative à cette méthode simple, on peut aussi envisager une observation latérale par un jeu de quatre à six caméras qui reconstituent la paroi externe de l'objet et déterminent la position angulaire d'un repère, en particulier la couture. On peut encore observer l'objet par une caméra 113 placée sous l'objet, notamment quand les objets sont opaques.

Dans un autre mode de réalisation, l'équipement comprend, en outre, des moyens de contrôle 112 configurés pour élaborer un signal de sortie représentatif de la conformité du calage de l'objet et/ou du positionnement d'un élément de décor sur l'objet. Typiquement, ce deuxième niveau de traitement est réalisé par des moyens de repérages, de préférence optiques, similaires ou identiques aux moyens de repérage 111, 113 définissant le premier niveau de traitement.

Lorsqu'on souhaite réaliser un calage plus fin ou contrôler la position d'un motif (contrôle de sa présence, de sa position angulaire ou contrôle de sa hauteur) une deuxième caméra 112 est placée au dessus de l'objet quand celui ci a été accosté et positionné avant sérigraphie.

On détermine si la position et/ou l'intégralité d'un décor -ou motif- préexistant est bien conforme aux spécifications, les mêmes algorithmes de reconnaissance d'images que ceux décrits pour le traitement d'image étant utilisés à cet effet.

L'invention est avantageusement mise en oeuvre dans une machine (équipement) de décor.

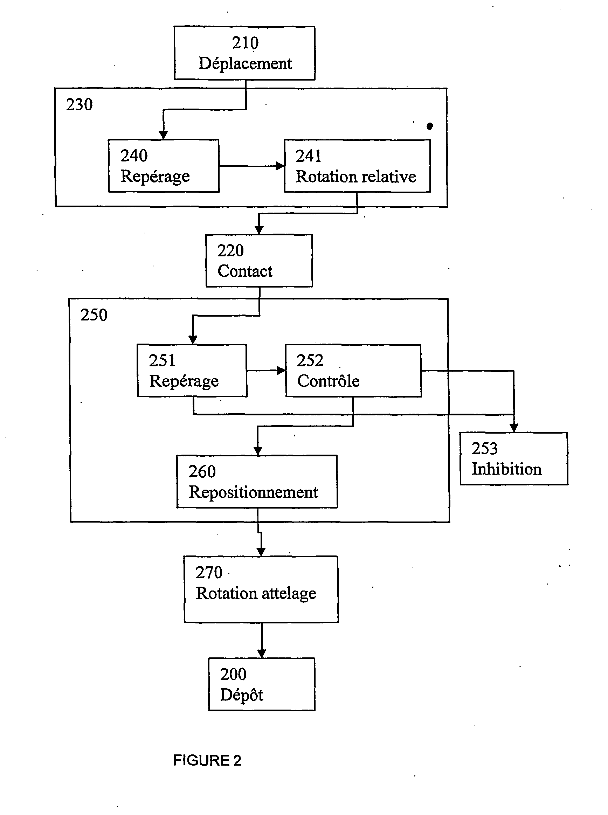

Comme schématiquement représenté sur la figure 2, le procédé comprend les étapes consistant à opérer un déplacement 210 de chaque objet jusqu'à assurer son contact 220 avec le dispositif de préhension ; et opérer sélectivement une rotation relative 241 de l'objet et du dispositif de préhension autour des premier et second axes de rotation pour atteindre ladite position de calage.

Le déplacement est assuré, par exemple, par les moyens de convoi et les pinces / bras mobile articulé décrits précédemment.

Le procédé selon l'invention comprend une étape de préparation 230, mise en oeuvre pour chaque objet en cours de chargement, et préalablement à son contact avec le dispositif de préhension.

Cette étape de préparation comprend une opération de repérage 240 consistant à élaborer un signal de sortie représentatif de la position angulaire relative des premier et second repères, et une opération de correction angulaire 241 consistant à opérer ladite rotation relative en fonction dudit signal de sortie.

Grâce à la correction angulaire préalable au contact entre l'objet et le dispositif de préhension, le déplacement de chaque objet comprend un mouvement de translation entre l'objet et le dispositif de préhension, pour atteindre la position de calage, le mouvement de translation étant ultérieur à cette opération de correction angulaire.

Dans un mode de réalisation, l'élaboration du signal de sortie comprend les étapes suivantes consistant à saisir 240, par des moyens optiques, une image de l'objet. L'image obtenue est alors traitée pour repérer une caractéristique de l'objet présentant une signature optique, et, à partir de la caractéristique repérée, on calcule la position angulaire de l'objet par rapport auxdits moyens optiques. De préférence, les moyens optiques comprennent au moins une caméra.

La précision obtenue avec une caméra numérique de résolution suffisante, par exemple 1280X1024 points est de plus ou moins 0,5° et le temps complet d'acquisition de l'image, de numérisation et de calcul d'angle est compris entre 50 et 100 millisecondes.

On réalise ainsi un premier niveau de traitement de l'image, par exemple par un déroulement du fond si l'objet est de type cylindrique (p.ex. une bouteille), et on repère une caractéristique géométrique de l'objet qui ait une signature optique. Typiquement on trouvera parmi les repères caractéristiques un cran mécanique (R1 sur la figure 1), le sigle de l'usine gravé sur le fond de l'objet ou un numéro de moule. Le traitement informatique utilisé peut être, par exemple, une reconnaissance d'image.

De préférence, la rotation relative est effectuée par rotation du dispositif de préhension autour de son axe de rotation.

Dans un autre mode de réalisation, on peut prévoir, en outre, des moyens de mise en rotation de l'objet, de sorte à ce que le mouvement de rotation relative soit effectué par une rotation de l'objet et une rotation du dispositif de préhension autour de leur axe de rotation respectif, dans des sens opposés. Ainsi, pour atteindre la position de calage, chaque élément tourne d'un angle inférieur à 90°, ce qui permet d'augmenter la vitesse moyenne d'atteinte de la position de calage.

Quel que soit son mode de réalisation, la rotation relative est sélective dans le sens où si, par hasard, l'objet et le dispositif de préhension sont dans une position relative telle qu'elle n'ait pas besoin d'être corrigée, la rotation relative peut ne pas être effectuée.

La position angulaire absolue du dispositif de préhension étant connue, on connaît donc la position à laquelle le repère de l'objet doit arriver après la correction angulaire du premier niveau de traitement. Et une fois la correction angulaire sélectivement effectuée, le procédé comprend, en outre, une opération de rotation 270 de l'attelage constitué par au moins l'objet et le dispositif de préhension solidaires, pour atteindre une position angulaire initiale déterminée, fonction d'un élément de décor à déposer sur l'objet, et une opération de dépôt 200 d'au moins un élément de décor sur l'objet à partir de la position angulaire initiale déterminée.

Cette rotation de l'attelage permet de présenter l'objet dans une position déterminée, fonction du décor à déposer, adéquate pour une opération de dépôt d'au moins un élément de décor sur l'objet.

Le procédé ainsi décrit s'applique aussi bien à un objet exempt de tout élément de décor qu'à un objet comportant un élément de décor.

Dans le cas où l'objet comporte un élément de décor, l'élément optique remarquable que constitue le premier repère peut être soit un repère de l'objet, comme vu précédemment, soit un élément du décor présentant lui-même une signature optique.

Toutefois, quelques variations peuvent parfois avoir lieu et décaler très légèrement le positionnement du décor. Ou bien, les spécifications du décor nécessitent un calage extrêmement précis.

Le procédé de calage selon l'invention peut donc être avantageusement complété par un deuxième niveau de traitement 250, une deuxième étape d'ajustement et de contrôle.

Dans un mode de réalisation, l'objet est exempt de tout élément de décor. Ce deuxième niveau de traitement 250 comprend alors notamment les étapes 251 consistant à saisir, par des moyens optiques, une image de l'objet accosté au dispositif de préhension.

Un traitement de l'image obtenue est réalisé pour repérer une caractéristique de l'objet présentant une signature optique. A partir de la caractéristique repérée, on calcule la position angulaire réelle de l'objet par rapport à celle attendue après l'opération de correction angulaire (241), et on génère un signal de sortie représentatif de la valeur de l'angle ainsi calculé pour, en fonction de la valeur de la position angulaire réelle, repositionner 260 l'attelage, et continuer 200 les opérations suivantes de dépôt d'éléments de décor.

Les moyens utilisés pour cette étape ne traitent qu'une petite zone mais avec une grande précision. Et ce contrôle du premier niveau de calage et repositionnement de l'attelage permet de réaliser une fonction de tarage.

Dans un autre mode de réalisation, l'objet comprend un élément de décor. Le deuxième niveau de traitement 250 comprend alors notamment les étapes 251 consistant à saisir, par des moyens optiques, une image de l'objet. Un traitement de l'image obtenue est réalisé pour repérer une caractéristique du décor présentant une signature optique. A partir de la caractéristique repérée, on calcule la position angulaire réelle de l'élément de décor par rapport à celle attendue après l'opération de correction angulaire (241), et on génère un signal de sortie représentatif de la valeur de l'angle ainsi calculé pour, en fonction de la valeur de la position angulaire réelle, repositionner 260 l'attelage, et continuer 200, ou inhiber 253 les opérations suivantes de dépôt d'éléments de décor.

Dans un mode de réalisation particulier, on saisit par une ou plusieurs cameras situées au dessus du poste de calage une image de l'objet comportant l'élément dont on veut vérifier le calage.

On réalise le même traitement d'image que pour le calage (reconnaissance d'image), ou, à titre d'alternative, un traitement de type calcul de gradient, qui permet de repérer une frontière de décor ou de relief sur l'objet.

On calcule alors la position angulaire de l'objet, et d'un élément de décor tel qu'une réserve, ou un motif verrier, ou encore d'une caractéristique verrière telle que la couture de moules.

On peut également par les mêmes moyens accéder à la position axiale d'un élément de décor.

La valeur de l'angle et/ou de la translation axiale ainsi déterminée est envoyée à des moyens de corrections de façon à effectuer un recalage 260 fin. Aussi, si la position du décor n'est pas conforme à une valeur prédéterminée, les moyens de contrôle peuvent envoyer un signal déclenchant l'inhibition 253 des opérations suivantes de sérigraphie.

Dans le cas du repérage axial de la position du décor on peut également envoyer un signal quantifié permettant d'effectuer un recalage mécanique, ou d'interdire les opérations suivantes si une non conformité est ainsi détectée.

On peut ainsi, par des traitements d'image classiques et une camera matricielle équipée d'une lentille optique de focale adaptée, par exemple, mesurer un décalage angulaire avec une précision de 0,2°, ou accéder à un décalage axial d'un motif avec une précision meilleure que le dixième de millimètre.

Grâce à cette précision, dans un mode de réalisation, on peut bloquer la sérigraphie d'un objet non conforme parce qu'un élément de décor serait décalé de manière excessive.

## Revendications

1. Procédé de chargement automatique et séquentiel d'objets d'un type prédéterminé (120) sur un dispositif de préhension (130), chaque objet et le dispositif de préhension présentant des premier (XX) et deuxième (YY) axes de rotation respectifs et des premier (R1) et deuxième (R2) repères respectifs de rotation autour de ces axes respectifs, le chargement de chaque objet (120) sur le dispositif de préhension conduisant à un contact de cet objet avec ce dispositif, à un alignement des premier et deuxième axes, et à un calage angulaire des premier et deuxième repères dans une position angulaire relative prédéterminée, ce procédé comprenant les étapes consistant à opérer un déplacement (210) de chaque objet jusqu'à assurer son contact (220) avec le dispositif de préhension; et opérer sélectivement une rotation relative de l'objet (120) et du dispositif de préhension (130) autour des premier (XX) et second (YY) axes de rotation pour atteindre ladite position de calage, **caractérisé en ce qu'**il comprend
• une étape de préparation (230), mise en oeuvre pour chaque objet (120) en cours de chargement, et préalablement à son contact avec le dispositif de préhension (130), cette étape de préparation comprenant une opération de repérage (240) consistant à élaborer un signal de sortie représentatif de la position angulaire relative des premier (R1) et second (R2) repères, et
• une opération de correction angulaire (241) consistant à opérer ladite rotation relative en fonction dudit signal de sortie.

2. Procédé de chargement selon la revendication 1, **caractérisé en ce que** le déplacement (210) de chaque objet comprend un mouvement de translation entre l'objet (120) et le dispositif de préhension (130), pour atteindre la position de calage, ultérieur à l'opération de correction angulaire (241).

3. Procédé de chargement selon l'une quelconque des revendications précédentes, **caractérisé en ce que** l'élaboration du signal de sortie comprend les étapes suivantes :
• saisir, par des moyens optiques (111,113), une image de l'objet,
• réaliser un traitement de l'image obtenue pour repérer une caractéristique de l'objet ou d'un élément de décor présentant une signature optique,
• calculer, à partir de la caractéristique repérée, la position angulaire de l'objet (120) par rapport auxdits moyens optiques.

4. Procédé de chargement selon l'une quelconque des revendications précédentes, **caractérisé en ce que** la rotation relative est effectuée par rotation du dispositif de préhension (130) autour de son axe de rotation (YY).

5. Procédé de chargement selon l'une quelconque des revendications précédentes, **caractérisé en ce que**, la position angulaire absolue du dispositif de préhension étant connue, le procédé comprend, en outre,
• une opération de rotation (270) de l'attelage constitué par au moins l'objet (120) et le dispositif de préhension (130) solidaires, pour atteindre une position angulaire initiale déterminée, fonction d'un élément de décor à déposer sur l'objet, et
• une opération de dépôt (200) d'au moins un élément de décor sur l'objet (120) à partir de la position angulaire initiale déterminée.

6. Procédé de chargement selon la revendication 5, **caractérisé en ce qu'**il comprend, en outre, une opération d'ajustement et de contrôle (250).

7. Procédé de chargement selon la revendication 6 dans laquelle l'opération d'ajustement et de contrôle (250) comprend les étapes consistant à
• saisir par des moyens optiques (112) une image de l'objet,
• réaliser un traitement de l'image obtenue pour repérer une caractéristique de l'objet ou du décor présentant une signature optique,
• calculer, à partir de la caractéristique repérée, la position angulaire réelle de l'objet ou de l'élément de décor par rapport à celle attendue après l'opération de correction angulaire (241),
• générer un signal de sortie représentatif de la valeur de l'angle ainsi calculé pour, en fonction de la valeur de la position angulaire réelle, repositionner (260) l'attelage, continuer (200) ou inhiber (253) les opérations suivantes de dépôt d'éléments de décor.

8. Equipement pour le chargement automatique et séquentiel d'objets (120) d'un type prédéterminé sur un dispositif de préhension (130), chaque objet et le dispositif de préhension présentant des premier (XX) et deuxième (YY) axes de rotation respectifs et des premier (R1) et deuxième (R2) repères respectifs de rotation autour de ces axes respectifs, le chargement de chaque objet sur le dispositif de préhension conduisant à un contact de cet objet avec ce dispositif, à un alignement des premier et deuxième axes, et à un calage angulaire des premier et deuxième repères dans une position angulaire relative prédéterminée, ledit équipement comprenant :
• ledit dispositif de préhension,
• des moyens (121) pour déplacer chaque objet et pour assurer son contact avec le dispositif de préhension,
• et des moyens (140) pour opérer sélectivement une rotation relative de l'objet et du dispositif de préhension autour des premier et second axes de rotation et pour atteindre ladite position de calage,
**caractérisé en ce qu'**il comprend en outre
• au moins un des moyens de repérage (111, 113) configurés pour élaborer un signal de sortie représentatif de la position angulaire relative des premier et second repères, et
• des moyens (150) de correction angulaire configurés pour opérer ladite rotation relative en fonction dudit signal de sortie.

9. Equipement selon la revendication 8,
**caractérisé en ce qu'**il comprend, en outre, des moyens de contrôle (112) configurés pour élaborer un signal de sortie représentatif de la conformité du calage de l'objet ou du positionnement d'un élément de décor.

10. Equipement selon la revendication 8 ou 9, **caractérisé en ce que** les moyens de repérage et/ou de contrôle sont des moyens optiques (111, 112, 113) et comprennent au moins une caméra.

## Claims

1. Method for automatic and sequential loading of objects of a predetermined type (120) onto a holding device (130), each object and the holding device having first (XX) and second (YY) respective axes of rotation and first (R¹) and second (R²) respective locators of rotation about these respective axes, the loading of each object (120) onto the holding device leading to a contact of this object with this device, to an alignment of the first and second axes, and to an angular setting of the first and second locators in a predetermined relative angular position, this method comprising the steps consisting in carrying out a movement (210) of each object until it is in contact (220) with the holding device; and selectively carrying out a relative rotation of the object (120) and of the holding device (130) about the first (XX) and second (YY) axes of rotation to achieve said setting position,
**characterized in that** it comprises:
• a preparation step (230), applied for each object (120) being loaded, and prior to its contact with the holding device (130),
this preparation step comprising a location operation (240) consisting in generating an output signal representative of the relative angular position of the first (121) and second (122) locators, and
• an operation of angular correction (241) consisting in carrying out said relative rotation according to said output signal.

2. Loading method according to Claim 1,
**characterized in that** the movement (210) of each object comprises a movement of translation between the object (120) and the holding device (130), to achieve the setting position, subsequent to the angular correction operation (241).

3. Loading method according to either one of the preceding claims, **characterized in that** the generation of the output signal comprises the following steps:
• taking, by optical means (111, 113), a picture of the object,
• carrying out a processing of the picture obtained to locate a feature of the object or of a decoration element having an optical signature,
• computing, based on the located feature, the angular position of the object (120) relative to said optical means.

4. Loading method according to any one of the preceding claims, **characterized in that** the relative rotation is carried out by rotating the holding device (130) about its axis of rotation (YY).

5. Loading method according to any one of the preceding claims, **characterized in that** the absolute angular position of the holding device being known, the method also comprises:
• an operation of rotation (270) of the coupling consisting of at least the object (120) and the holding device (130) fixedly attached, to reach a determined initial angular position, as a function of a decoration element to be placed on the object, and
• an operation of placement (200) of at least one decoration element on the object (120) based on the determined initial angular position.

6. Loading method according to Claim 5,
**characterized in that** it also comprises an adjustment and inspection operation (250).

7. Loading method according to Claim 6, wherein the adjustment and inspection operation (250) comprises the steps consisting in:
• taking, by optical means (112), a picture of the object,
• carrying out a processing of the picture obtained to locate a feature of the object or of the decoration having an optical signature,
• computing, based on the located feature, the real angular position of the object or of the decoration element relative to that which is expected after the angular correction operation (241),
• generating an output signal representative of the value of the angle thus computed in order to, as a function of the value of the real angular position, reposition (260) the coupling, continue (200) or disable (253) the following operations of placing decoration elements.

8. Item of equipment for the automatic and sequential loading of objects (120) of a predetermined type onto a holding device (130), each object and the holding device having respective first (XX) and second (YY) axes of rotation and respective first (R1) and second (R2) locators of rotation about these respective axes, the loading of each object onto the holding device leading to a contact of this object with this device, to an alignment of the first and second axes, and to an angular setting of the first and second locators in a predetermined relative angular position, said item of equipment comprising:
• said holding device,
• means (121) for moving each object and for ensuring it is in contact with the holding device,
• and means (140) for selectively carrying out a relative rotation of the object and of the holding device about first and second axes of rotation and for achieving said setting position,
**characterized in that** it also comprises
• at least one of the locating means (111, 113) configured to generate an output signal representative of the relative angular position of the first and second locators, and
• angular correction means (150) configured to carry out said relative rotation as a function of said output signal.

9. Item of equipment according to Claim 8,
**characterized in that** it also comprises inspection means (112) configured to generate an output signal representative of the conformity of the setting of the object or of the positioning of a decoration element.

10. Item of equipment according to Claim 8 or 9, **characterized in that** the locating and/or inspection means are optical means (111, 112, 113) and comprise at least one camera.

## Patentansprüche

1. Verfahren zum automatischen und sequentiellen Laden von Gegenständen eines vorgegebenen Typs (120) auf eine Haltevorrichtung (130), wobei jeder Gegenstand und die Haltevorrichtung jeweils erste (XX) und zweite (YY) Drehachsen und jeweils erste (R1) und zweite (R2) Festpunkte für die Drehung um jeweils diese Achsen aufweisen, wobei das Laden jedes Gegenstandes (120) auf die Haltevorrichtung zu einem Kontakt dieses Gegenstandes mit der Vorrichtung, einer Ausrichtung der ersten und zweiten Achsen und einer Winkel-Feststellung der ersten und zweiten Festpunkte in einer vorgegebenen relativen Winkelposition führt, wobei das Verfahren die folgenden Schritte aufweist: Ausführen einer Bewegung (210) jedes Gegenstandes, bis sein Kontakt (220) mit der Haltervorrichtung sichergestellt ist; und selektives Ausführen einer Relativdrehung des Gegenstandes (120) und der Haltevorrichtung (130) um die ersten (XX) und zweiten (YY) Drehachsen, um die Feststellung zu erreichen, **gekennzeichnet durch**:
• einen Vorbereitungsschritt (230), der für jeden Gegenstand (120) während des Ladens und vor dessen Kontakt mit der Haltevorrichtung (130) ausgeführt wird, wobei dieser Vorbereitungsschritt eine Ortungsoperation (240) umfasst, die besteht aus der Erzeugung eines Ausgangssignals, welches repräsentativ ist für die relative Winkelposition der ersten (R1) und zweiten (R2) Festpunkte, und
• eine Winkelkorrekturoperation (241), die besteht aus der Ausführung dieser Relativdrehung als Funktion des Ausgangssignals.

2. Verfahren zum Laden nach Anspruch 1, **dadurch gekennzeichnet, dass** die Bewegung (210) jedes Gegenstandes eine Translationsbewegung zwischen dem Gegenstand (120) und der Haltevorrichtung (130) umfasst, um nach der Winkelkorrekturoperation (241) die Feststellungs-Position zu erreichen.

3. Verfahren zum Laden nach einem der vorangehenden Ansprüche, **dadurch gekennzeichnet, dass** die Erzeugung des Ausgangssignals die folgenden Schritte umfasst:
• Aufnehmen eines Bildes des Gegenstandes durch optische Mittel (111, 113),
• Ausführen einer Verarbeitung des aufgenommenen Bildes zum Auffinden eines Merkmals des Gegenstandes oder eines Dekorelementes, mit einer optischen Signatur, und
• Berechnen der Winkelposition des Gegenstandes (120) im Verhältnis zu den optischen Mitteln ausgehend von dem aufgefundenen Merkmal.

4. Verfahren zum Laden nach einem der vorangehenden Ansprüche, **dadurch gekennzeichnet, dass** die Relativdrehung durch Drehung der Haltevorrichtung (130) um ihre Drehachse (YY) ausgeführt wird.

5. Verfahren zum Laden nach einem der vorangehenden Ansprüche, **dadurch gekennzeichnet, dass** unter der Voraussetzung, dass die absolute Winkelposition der Haltevorrichtung bekannt ist, das Verfahren ferner umfasst:
• eine Rotationsoperation (270) der Kopplung, welche gebildet ist wenigstens aus dem Gegenstand (120) und der Haltevorrichtung (130), die fest miteinander verbunden sind, um eine vorgegebene anfängliche Winkelposition als eine Funktion eines Dekorelementes, das auf den Gegenstand anzubringen ist, zu erreichen, und
• eine Operation des Aufbringens (200) wenigstens eines Dekorelementes auf den Gegenstand (120) ausgehend von der vorgegebenen anfänglichen Winkelposition.

6. Verfahren zum Laden nach Anspruch 5, **dadurch gekennzeichnet, dass** es ferner eine Einstell- und Steueroperation (250) umfasst.

7. Verfahren zum Laden nach Anspruch 6, **dadurch gekennzeichnet, dass** die Einstell- und Steueroperation (250) die folgenden Schritte umfasst:
• Aufnehmen eines Bildes des Gegenstandes mittels optischer Mittel (112);
• Ausführen einer Verarbeitung des erhaltenen Bildes, um ein Merkmal des Gegenstandes oder des Dekors mit einer optischen Signatur aufzufinden;
• Berechnen der realen Winkelposition des Gegenstandes oder Dekorelementes im Verhältnis zu der, welche nach der Winkelkorrekturoperation (241) erwartet wird, ausgehend von dem aufgenommenen Merkmal,
• Erzeugen eines Ausgangssignals, das für den so berechneten Winkel repräsentativ ist, um als Funktion des Wertes der realen Winkelposition die Kopplung neu zu positionieren (260), und Fortsetzen (200) oder Sperren (253) der folgenden Operationen zum Aufbringen von Dekorelementen.

8. Vorrichtung zum automatischen und sequentiellen Laden von Gegenständen (120) vorgegebener Art auf eine Haltevorrichtung (130), wobei jeder Gegenstand und jede Haltevorrichtung jeweils erste (XX) und zweite (YY) Drehachsen und jeweils ersten (R1) und zweite (R2) Festpunkte zur Drehung um diese jeweiligen Achsen aufweisen, wobei das Laden jedes Gegenstandes auf die Haltevorrichtung zu einem Kontakt dieses Gegenstandes mit der Vorrichtung, zu einer Ausrichtung der ersten und zweiten Achsen und zu einer Winkel-Feststellung der ersten und zweiten Festpunkte in einer vorgegebenen relativen Winkelposition führt, wobei die Einrichtung umfasst:
• die Haltevorrichtung,
• Mittel (121) zum Bewegen jedes Gegenstandes und zum Sicherstellen seines Kontakts mit der Haltevorrichtung,
• und Mittel (140) zum selektiven Ausführen einer relativen Drehung des Gegenstandes und der Haltevorrichtung um die ersten und zweiten Drehachsen und zum Erreichen der Feststellungs-Position,
**dadurch gekennzeichnet, dass** sie ferner umfasst:
• wenigstens ein Ortungsmittel (111, 113), das dazu eingerichtet ist, ein Ausgangssignal zu erzeugen, welches für die relative Winkelposition der ersten und zweiten Festpunkte repräsentativ ist, und
• Mittel (150) zum Korrigieren des Winkels, die dazu eingerichtet sind, diese Relativdrehung als Funktion des Ausgangssignals auszuführen.

9. Vorrichtung nach Anspruch 8, **dadurch gekennzeichnet, dass** sie ferner Steuermittel (112) aufweist, die dazu eingerichtet sind, ein Ausgangssignal zu erzeugen, das repräsentativ ist für die Konformität der Feststellung des Gegenstandes oder der Positionierung des Dekorelementes.

10. Vorrichtung nach Anspruch 8 oder 9, **dadurch gekennzeichnet, dass** die Ortungsmittel und/oder Steuermittel optische Mittel (111, 112, 113) sind und wenigstens eine Kamera umfassen.
